# FASCICULE DE BREVET EUROPEEN

(11) **EP 2 524 614 B1**
(45) Date de publication et mention de la délivrance du brevet: **09.04.2014**
(21) Numéro de dépôt: 12002298.3
(22) Date de dépôt: 29.03.2012
(51) Int. Cl.: A44C 5/24

(54) **Fermoir à boucle déployante**
Verschluss mit Klappöse
Clasp with extensible loop

(30) Priorité: 19.05.2011 CH 8512011
(43) Date de publication de la demande: 21.11.2012
(73) Titulaire: Boucledor SA, 1217 Meyrin (CH)
(72) Inventeur: Costantini, Guillaume, 74160 Beaumont (FR)
(74) Mandataire: Micheli & Cie SA

(56) Documents cités:
- EP-A1- 1 203 541
- FR-A- 518 031
- GB-A- 1 337 304

## Description

La présente invention a pour objet un fermoir pour bracelet à boucle déployante et comportant une articulation du type genouillère.

Un fermoir de ce type est décrit par exemple dans le document EP 1 203 541 et comporte une première et une seconde lame articulées l'une à l'autre à une de leur extrémité, leur autre extrémité présentant chacune un bossage. L'un des bossage comprend au moins un élément genouillère monté pivotant autour d'un axe. Ledit élément genouillère est destiné à coopérer avec un rainure parallèle audit axe réalisée dans l'autre des bossages lorsque les lames sont repliées l'une sur l'autre pour verrouiller le fermoir. L'élément genouillère étant monté de manière pivotante sur une des lames, il est nécessaire de prévoir des moyens assurant le positionnement correct dudit élément genouillère lorsque le fermoir est en position déverrouillée afin de garantir une manipulation aisée du fermoir par un utilisateur pour son verrouillage. Ces moyens de positionnement ainsi que les bossages participent à la complexité et à l'encombrement du fermoir qui peuvent nuire à sa facilité de réalisation et à son esthétisme. De plus, l'ajout d'une lame supplémentaire pour permettre un déploiement plus important du fermoir nécessiterait l'ajout d'un deuxième mécanisme de genouillère, indépendant du premier, augmentant encore la complexité du fermoir en terme de nombre de pièce et de manipulation.

Un autre fermoir selon le préambule de la revendication 1 est connu de FR 518031.

La présente invention a pour but d'éviter ces inconvénients en proposant un fermoir à boucle déployante comportant une articulation de type genouillère qui soit simple et esthétique, comporte peu de pièce, soit peu sujet à l'usure et qui permette un verrouillage aisé et sûr dudit fermoir tout en offrant un déploiement suffisant.

La présente invention a pour objet un fermoir déployant pour bracelet comprenant une lame fixe, une première lame dépliante articulée à la lame fixe à une première de leurs extrémités autour d'un premier point de pivotement, une seconde lame dépliante articulée par l'une de ses extrémités à une seconde extrémité de la première lame dépliante autour d'un deuxième point de pivotement et des moyens de blocage des première et seconde lames dépliantes pour bloquer lesdites lames dépliantes lorsqu'elles sont toutes deux repliées sur la lame fixe, lesdits moyens de blocage comprenant une articulation du type genouillère, caractérisé par le fait que
- la première lame mobile est une lame élastique;
- par le fait que ladite articulation est constituée par un premier élément d'articulation articulé à la seconde extrémité de la seconde lame dépliante autour d'un troisième point de pivotement et par un second élément d'articulation solidaire de la lame fixe et destiné à coopérer avec le premier élément d'articulation ;
- et par le fait que la première lame mobile et les premier et second éléments d'articulation sont agencés pour que,
   - l'effort de tension sur la première lame mobile soit maximal lorsque les premier et second éléments d'articulation sont dans une position où ils coopèrent et que le deuxième point de pivotement est dans une position critique dans laquelle ledit deuxième point de pivotement est aligné avec la droite passant par les premier et troisième points de pivotement ;
   - lorsque le premier point de pivotement dépasse cette position critique et passe du côté de la droite passant par les premier et troisième points de pivotement duquel se trouve la lame fixe, la première lame mobile se détende et entraîne la seconde lame mobile dans une position où les première et seconde lame mobiles sont entièrement rabattues sur la lame fixe, la première lame mobile ne se détendant pas complètement et conservant une tension bloquant les première et seconde lame mobile dans leur position entièrement rabattues sur la lame fixe ;
   - lorsque le premier point de pivotement dépasse cette position critique et passe de l'autre côté de la droite passant par les premier et troisième point de pivotement, la première lame mobile se détend totalement pour retrouver un état non contraint dans lequel les première et seconde lames mobiles peuvent être dépliées par rapport à la lame fixe et sont libres autour de leur point de pivotement respectif.

Les figures annexées illustrent schématiquement et à titre d'exemple uniquement une forme d'exécution d'un fermoir à boucle déployante selon l'invention.

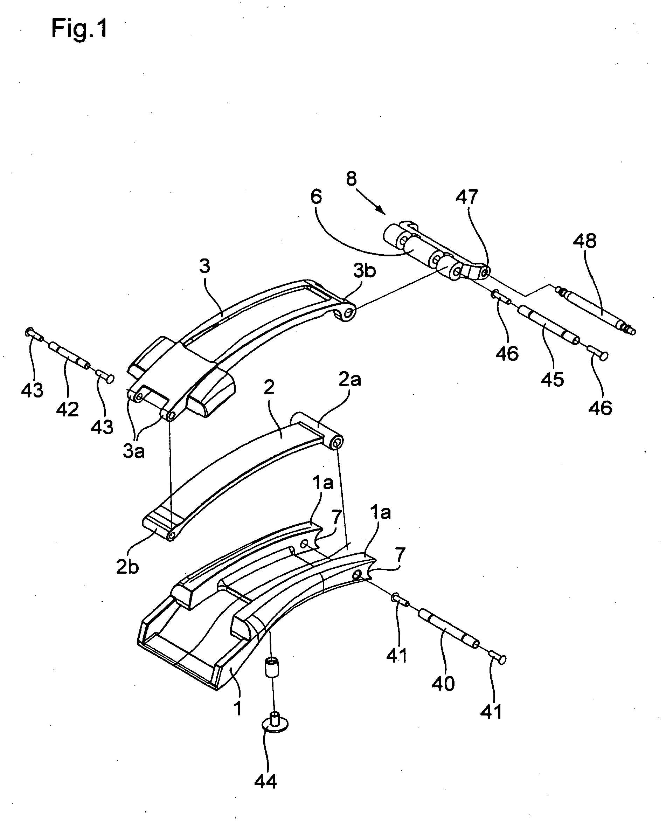

La figure 1 est une vue éclatée du fermoir à boucle déployante selon l'invention.

La figure 2 est une vue de côté du fermoir selon l'invention en position déployée.

Les figures 3 et 4 illustrent le verrouillage du fermoir selon l'invention, la figure 4 illustrant le fermoir en position verrouillée.

La figure 5 est une vue de côté en coupe selon un plan perpendiculaire à la ligne V-V du fermoir en position verrouillée illustré à la figure 4.

Le fermoir selon la présente invention tel qu'illustré aux figures comprend une première lame 1, dite lame fixe 1, une seconde lame 2, dite lame élastique 2 et une troisième lame 3, dite lame mobile 3.

La lame élastique 2 est articulée par une première de ses extrémités 2a à une première extrémité 1a de la lame fixe 1 au moyen par exemple d'une première barrette de fixation 40 et de premiers rivets 41, ladite articulation formant un premier point de pivotement A. A sa seconde extrémité 2b, la lame élastique 2 est articulée à une première extrémité 3a de la lame mobile 3 au moyen d'une seconde barrette de fixation 42 et de seconds rivets 43, ladite articulation formant un second point de pivotement B. Il est évident que tout autre moyen d'articulation approprié pourrait être utilisé pour articuler la lame fixe à la lame élastique 2 et la lame élastique 2 à la lame mobile 3.

La lame fixe 1 comprend en outre des moyens de fixation 44 permettant de relier ladite lame fixe 1 à un brin de bracelet de montre ou de bijouterie (non illustré). De manière évidente pour l'homme du métier ce bracelet peut être élastique ou non, en cuir ou en métal ou avoir toute autre forme appropriée.

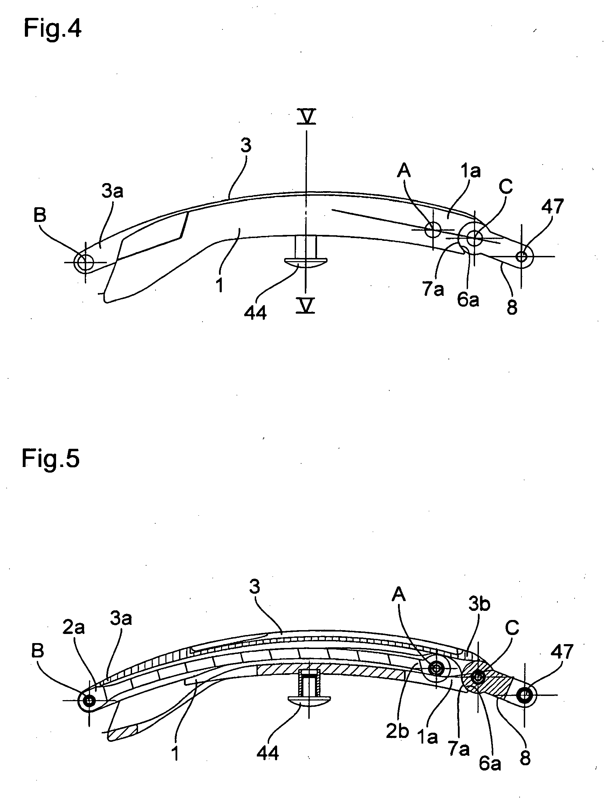

De préférence, la lame fixe 1, la lame élastique 2 et la lame mobile 3 sont conformées de sorte que ladite lame élastique 2 et ladite lame mobile 3 puissent être rabattues sur la lame fixe 1 de manière à ce qu'une fois repliées, les trois lames soient essentiellement dans le même plan et que leur épaisseur ne dépasse pas celle de la lame fixe 1 comme illustré sur la figure 4.

Le fermoir selon l'invention comprend en outre des moyens de blocage permettant de bloquer la lame élastique 2 et la lame mobile 3 dans leur position repliée sur la lame fixe 1. Ces moyens de blocage comprennent une articulation du type genouillère constituée d'un élément mâle d'articulation 6 articulé autour d'un troisième point de pivotement C à une seconde extrémité 3b de la lame mobile 3 au moyen par exemple d'une troisième barrette de fixation 45 et de troisièmes rivets 46. La face active 6a dudit élément mâle d'articulation 6 présente une forme essentiellement arrondie et convexe et ledit élément mâle 6 est destiné à venir s'insérer dans un élément femelle d'articulation 7 que présente la première extrémité 1a de la lame fixe 1. Pour ce faire, la face active 7a dudit élément femelle d'articulation 7 présente une forme complémentaire de la face active 6a de l'élément mâle d'articulation 6, c'est-à-dire une forme essentiellement arrondie et concave. L'élément mâle d'articulation 6, l' élément femelle d'articulation 7 et la lame élastique 2 sont agencés pour bloquer la lame élastique 2 et la lame mobile 3 dans leur position repliée sur la lame fixe 1, lorsque la lame mobile 3 et la lame élastique 2 sont amenées dans une position pour laquelle le second point de pivotement B se trouve au-dessous de la droite passant par les premier et troisième points de pivotement A et C (les indications de position relative, comme « au-dessous » ou « au-dessus » sont données en référence aux figures).

De préférence et comme illustré dans cette forme d'exécution, l'élément mâle d'articulation 6 est partie d'un élément 8 comportant encore des moyens de fixation permettant de relier ledit élément 8 et donc la lame mobile 3 à un brin de bracelet. Par exemple et comme illustré, lesdits moyens de fixation peuvent comporter des ouvertures 47 pratiquées dans ledit élément 8 et destinées à recevoir les extrémités d'une barrette télescopique 48.

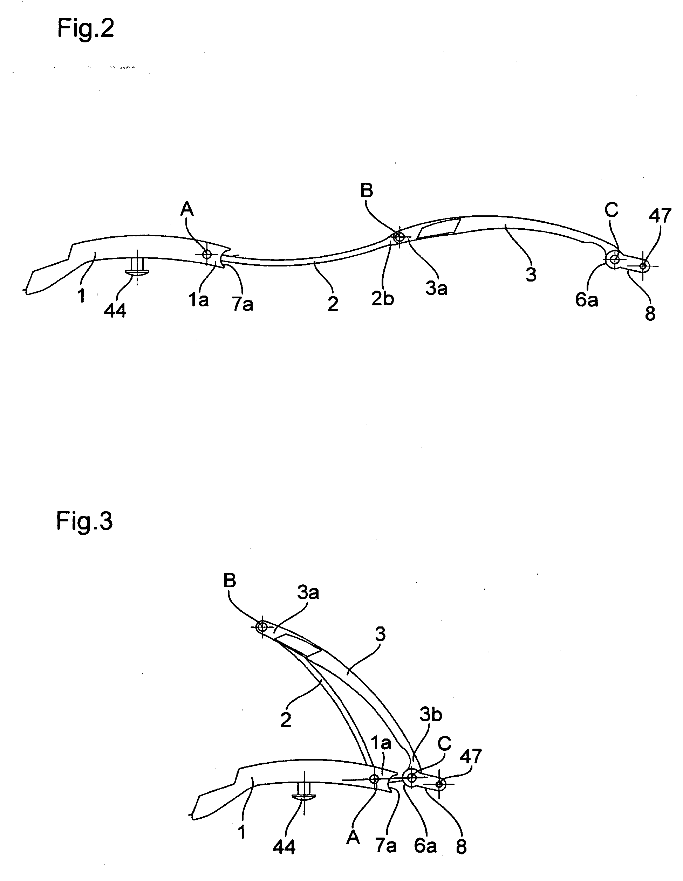

Le verrouillage du fermoir selon l'invention va maintenant être décrit en détail en référence aux figures 3, 4 et 5.

A partir de la position déverrouillée et dépliée du fermoir illustrée à la figure 2, la lame mobile 3 est repliée sur la lame élastique 2 de manière à amener l'élément mâle d'articulation 6 articulé à ladite lame mobile 3 dans l'élément femelle d'articulation 7 que présente la première extrémité 1a de la lame fixe 1. Cette première opération est illustrée à la figure 3. Dans un second temps, la lame élastique 2 et la lame mobile 3 sont rabattues ensemble sur la lame fixe 1. Durant cette seconde opération, la lame élastique 2 se bande progressivement sous l'effort de tension. Les lames élastique 2 et mobile 3 doivent être rabattues jusqu'à ce que le second point de pivotement B passe au-dessous de la droite passant par les premier et troisième points de pivotement A et C. En effet, au point critique où les premier, deuxième et troisième points de pivotement A, B, C sont alignés, la tension de la lame élastique 2 est maximale et une fois ce point critique dépassé, la lame élastique 2 cherche à se détendre et entraîne alors la lame mobile 3 jusqu'à ce que ces deux lames soient entièrement rabattues sur la lame fixe 1. Le fermoir est alors en position verrouillée comme illustré sur les figures 4 et 5.

Dans cette position verrouillée, le maintien de la lame élastique 2 et de la lame mobile 3 repliées sur la lame fixe 1 est assuré par la tension de la lame élastique 2 entre le premier point de pivotement A et le second point de pivotement B. La lame élastique 2 conserve une tension de précontrainte qui annule tout jeu résiduel. Dans cette position verrouillée, un effort de traction exercé sur la lame fixe 1 ou la lame mobile 3 (via par exemple les brins de bracelet qui leur sont reliés) et dirigé essentiellement parallèlement leur axe longitudinal respectif a pour effet non seulement de ne pas tendre vers l'ouverture du fermoir mais au contraire augmente l'effort de verrouillage de celui-ci.

Le déverrouillage du fermoir va maintenant être décrit en détail.

Depuis sa position verrouillée illustrée aux figures 4 et 5, l'utilisateur exerce une force sur les lames élastique 2 et mobile 3 dirigée essentiellement perpendiculairement à leur axe longitudinal pour soulever celles-ci simultanément par rapport à la lame fixe 1. Cette opération doit être poursuivie jusqu'à dépassement du point critique décrit ci-dessus, c'est-à-dire jusqu'à ce que le second point de pivotement B repasse au dessus de la droite passant par les premier et troisième points de pivotement A et C. A ce point critique, la tension de la lame élastique 2 est maximale et une fois ce point critique dépassé, la lame élastique 2 se détend provoquant son déploiement et celui de la lame mobile 3 et le déverrouillage du fermoir. Le fermoir est donc dans sa position déverrouillée illustrée à la figure 2 dans laquelle la lame élastique 2 se trouve dans un état non contraint et est totalement libre de pivoter autour des premier et second points de pivotement, tout comme la lame mobile 3.

De manière évidente, la force nécessaire pour le verrouillage et le déverrouillage du fermoir selon l'invention dépendent notamment de la lame élastique 2 et de ses propriétés élastiques. Celle-ci pourra en particulier être conformée de sorte que la force de traction nécessaire au déverrouillage du fermoir soit importante rendant le fermoir encore plus sûr.

Le fermoir selon la présente invention offre de nombreux avantages : son ouverture est aisée du fait qu'elle ne fait intervenir qu'un seul appui et une seule action, il est adaptable sur tout type de bracelet, son système de blocage à genouillère permet d'éviter toute ouverture intempestive en cas d'effort de traction parallèle à l'axe longitudinal du fermoir sur la lame fixe 1 et la lame mobile 3 auxquelles est relié le bracelet. De plus, l'agencement en série des trois lames du fermoir et le peu de pièces qu'il comprend lui confère un encombrement optimisé puisqu'il est compact et proportionné en position verrouillée et permet un déploiement suffisant en position déverrouillée. Le fermoir selon l'invention étant visible à tout moment, cet encombrement optimisé permet de ne pas nuire à l'esthétique globale du bracelet et laisse la possibilité de personnaliser ledit fermoir sans nuire à son fonctionnement. Le fermoir selon l'invention est également résistant à l'usure de par la nature et l'agencement de ces composants.

De plus, le fermoir selon l'invention permet une construction homogène en terme de matériau : tous les composants peuvent être réalisés dans une matière commune, l'essentiel étant que la lame élastique 2 puisse remplir sa fonction élastique qui garantit la cinématique du fermoir (verrouillage et déverrouillage).

La présente forme d'exécution a été décrite à titre d'exemple uniquement, des variations peuvent lui être apportées sans sortir du cadre de la présente invention.

## Revendications

1. Fermoir déployant pour bracelet comprenant une lame fixe (1), une première lame dépliante (2) articulée à la lame fixe (1) à une première (1a, 2a) de leurs extrémités autour d'un premier point de pivotement (A), une seconde lame dépliante (3) articulée par l'une de ses extrémités (3a) à une seconde extrémité (2b) de la première lame dépliante (2) autour d'un deuxième point de pivotement (B) et des moyens de blocage des première et seconde lames dépliantes (2, 3) pour bloquer lesdites lames dépliantes lorsqu'elles sont toutes deux repliées sur la lame fixe (1), lesdits moyens de blocage comprenant une articulation du type genouillère, **caractérisé par le fait que**
- la première lame mobile (2) est une lame élastique ;
- **par le fait que** ladite articulation est constituée par un premier élément d'articulation (6) articulé à la seconde extrémité (3b) de la seconde lame dépliante (3) autour d'un troisième point de pivotement (C) et par un second élément d'articulation (7) solidaire de la lame fixe (1) et destiné à coopérer avec le premier élément d'articulation (6) ;
- et **par le fait que** la première lame mobile (2) et les premier et second éléments d'articulation sont agencés pour que,
i. l'effort de tension sur la première lame mobile (2) soit maximal lorsque les premier et second éléments d'articulation (6, 7) sont dans une position où ils coopèrent et que le deuxième point de pivotement (B) est dans une position critique dans laquelle ledit deuxième point de pivotement (B) est aligné avec la droite passant par les premier et troisième points de pivotement (A, C) ;
ii. lorsque le premier point de pivotement (B) dépasse cette position critique et passe du côté de la droite passant par les premier et troisième points de pivotement (A, C) duquel se trouve la lame fixe (1), la première lame mobile (2) se détende et entraîne la seconde lame mobile (3) dans une position où les première et seconde lame mobiles (2, 3) sont entièrement rabattues sur la lame fixe (1), la première lame mobile (2) ne se détendant pas complètement et conservant une tension bloquant les première et seconde lame mobile (2, 3) dans leur position entièrement rabattues sur la lame fixe (1)
iii. lorsque le premier point de pivotement (B) dépasse cette position critique et passe de l'autre côté de la droite passant par les premier troisième point de pivotement (A, C), la première lame mobile (2) se détend totalement pour retrouver un état non contraint dans lequel les première et seconde lames mobiles peuvent être dépliées par rapport à la lame fixe (1) et sont libres autour de leur point de pivotement respectif (A, B, C).

2. Fermoir selon la revendication 1, **caractérisé par le fait que** le premier élément d'articulation est un élément mâle d'articulation (6) présentant une face active (6a) essentiellement arrondie et convexe et destinées à coopérer la face active (7a) de forme complémentaire d'un élément femelle d'articulation (7) que présente la première extrémité (1a) de la lame fixe (1) et constituant le second élément d'articulation.

3. Fermoir selon l'une des revendications précédentes, **caractérisé par le fait que** tous ces composants sont réalisés dans un même matériau.

4. Fermoir selon l'une des revendications précédentes, **caractérisé par le fait que** le premier élément d'articulation (6) est solidaire de moyens de fixation destinés à relier un brin de bracelet au fermoir.

## Patentansprüche

1. Klappverschluss für Armbänder, der eine feste Klinge (1), eine erste faltbare Klinge (2), die gelenkig an der festen Klinge (1) an einem ersten (1a, 2a) ihrer Enden um einen ersten Schwenkpunkt (A) herum gelagert ist, eine zweite faltbare Klinge (3), die über eines ihrer Enden (3a) an einem zweiten Ende (2b) der ersten faltbaren Klinge (2) um einen zweiten Schwenkpunkt (B) herum gelagert ist, und Sperrmittel der ersten und der zweiten faltbaren Klinge (2, 3) zum Sperren der faltbaren Klingen umfasst, wenn sie alle beide auf der festen Klinge (1) gefaltet sind, wobei die Sperrmittel ein Gelenk des Typs Kniegelenk umfassen, **dadurch gekennzeichnet, dass**:
- die erste bewegliche Klinge (2) eine elastische Klinge ist;
- dadurch, dass das Gelenk aus einem ersten Gelenkelement (6), das gelenkig an dem zweiten Ende (3b) der zweiten faltbaren Klinge (3) um einen dritten Schwenkpunkt (C) herum gelagert ist, und aus einem zweiten Gelenkelement (7) besteht, das fest mit der festen Klinge (1) verbunden ist und dazu bestimmt ist, mit dem ersten Gelenkelement (6) zusammenzuwirken;
- und dadurch, dass die erste bewegliche Klinge (2) und das erste und das zweite Gelenkelement derart gestaltet sind, dass:
i. die Spannkraft auf der ersten beweglichen Klinge (2) maximal ist, wenn das erste und das zweite Gelenkelement (6, 7) sich in einer Position befinden, in der sie zusammenwirken, und der zweite Schwenkpunkt (B) in einer kritischen Position ist, in der der zweite Schwenkpunkt (B) mit der Geraden fluchtet, die durch den ersten und den dritten Schwenkpunkt (A, C) verläuft;
ii. wenn der erste Schwenkpunkt (B) diese kritische Position überschreitet und zur Seite der Geraden übergeht, die durch den ersten und durch den dritten Schwenkpunkt (A, C) verläuft, auf der sich die feste Klinge (1) befindet, die erste bewegliche Klinge (2) sich entspannt und die zweite bewegliche Klinge (3) in eine Position mitnimmt, wo die erste und die zweite bewegliche Klinge (2, 3) vollständig auf der festen Klinge (1) umgeklappt sind, wobei die erste bewegliche Klinge (2) sich nicht vollständig entspannt und eine Spannung bewahrt, die die erste und die zweite bewegliche Klinge (2, 3) in ihrer vollständig auf der festen Klinge (1) umgeklappten Position sperrt
iii. wenn der erste Schwenkpunkt (B) diese kritische Position überschreitet und zur anderen Seite der Geraden übergeht, die durch den ersten und den dritten Schwenkpunkt (A, C) verläuft, die erste bewegliche Klinge (2) sich vollständig entspannt, um einen nicht gespannten Zustand einzunehmen, in dem die erste und die zweite bewegliche Klinge in Bezug zur festen Klinge (1) gefaltet werden können und um ihren jeweiligen Schwenkpunkt (A, B, C) herum frei sind.

2. Verschluss nach Anspruch 1, **dadurch gekennzeichnet, dass** das erste Gelenkelement ein Außengelenkelement (6) ist, das eine aktive Stirnfläche (6a) aufweist, die im Wesentlichen abgerundet und konvex ist und dazu bestimmt ist, mit der aktiven Stirnfläche (7a) mit ergänzender Form eines Muttergelenkelements (7) zusammenzuwirken, das das erste Ende (1a) der festen Klinge (1) aufweist und das zweite Gelenkelement bildet.

3. Verschluss nach einem der vorhergehenden Ansprüche, **dadurch gekennzeichnet, dass** sämtliche seiner Bauteile aus einem selben Material ausgeführt sind.

4. Verschluss nach einem der vorhergehenden Ansprüche, **dadurch gekennzeichnet, dass** das erste Gelenkelement (6) fest mit Befestigungsmitteln verbunden ist, die dazu bestimmt sind, einen Armbandstrang mit dem Verschluss zu verbinden.

## Claims

1. Fold-over clasp for a bracelet comprising a fixed bar (1), a first fold-out bar (2) articulated to the fixed bar (1) at a first (1a, 2a) of their ends about a first pivot point (A), a second fold-out bar (3) articulated by one of its ends (3a) at a second end (2b) of the first fold-out bar (2) about a second pivot point (B), and means for blocking the first and second fold-out bars (2, 3) to block said fold-out bars when they are both folded over the fixed bar (1), the said blocking means comprising a knuckle type hinge, **characterised in that**
- the first moveable bar (2) is an elastic bar;
- that the said hinge is formed from a first hinge element (6) articulated to the second end (3b) of the second fold-out bar (3) about a third pivot point (C) and from a second hinge element (7) fixedly attached to the fixed bar (1) and intended to cooperate with the first hinge element (6);
- and that the first moveable bar (2) and the first and second hinge elements are arranged so that,
i. the tension force on the first moveable bar (2) is at a maximum when the first and second hinge elements (6, 7) are in a position where they cooperate and the second pivot point (B) is in a critical position in which said second pivot point (B) is aligned with the straight line passing through the first and third pivot points (A, C);
ii. when the first pivot point (B) exceeds this critical position and passes from the side of the straight line passing through the first and third pivot points (A, C) at which the fixed bar (1) is located, the first moveable bar (2) relaxes and drives the second moveable bar (3) into a position where the first and second moveable bars (2, 3) are entirely folded back on the fixed bar (1), the first moveable bar (2) not relaxing completely and retaining a tension immobilising the first and second moveable bars (2, 3) in their position of being entirely folded back on the fixed bar (1),
iii. when the first pivot point (B) exceeds this critical position and passes from the other side of the straight line passing through the first and third pivot points (A, C), the first moveable bar (2) relaxes fully to return to an unconstrained state in which the first and second moveable bars can be unfolded with respect to the fixed bar (1) and are free to move about their respective pivot point (A, B, C).

2. Clasp as claimed in claim 1, **characterised in that** the first hinge element is a male hinge element (6) having an active face (6a) which is essentially rounded and convex and intended to cooperate with the active face (7a), which is of a complementary shape, of a female hinge element (7) on the first end (1a) of the fixed bar (1) and forming the second hinge element.

3. Clasp as claimed in any one of the preceding claims, **characterised in that** all these components are produced from the same material.

4. Clasp as claimed in any one of the preceding claims, **characterised in that** the first hinge element (6) is fixedly attached to fixing means intended to connect a bracelet strap to the clasp.
